# DEMANDE DE BREVET EUROPEEN

(11) **EP 3 171 122 A1**
(43) Date de publication de la demande: **24.05.2017**
(21) Numéro de dépôt: 16199013.0
(22) Date de dépôt: 16.11.2016
(51) Int. Cl.: G01B 5/24, B60R 13/10

(54) **DISPOSITIF DE CONTROLE DE D'UNE PLAQUE D'IMMATRICULATION SUR UN VEHICULE ET UTILISATION DU DISPOSITIF**

(30) Priorité: 17.11.2015 FR 1502397
(71) Demandeur: Capelec Sarl, 34000 Montpellier (FR)
(72) Inventeur: COTON, Thierry, 34070 MONTPELLIER (FR); BACHER, Christian, 34730 PRADES LE LEZ (FR); PETELET, Georges, 92700 COLOMBES (FR); DUCROS, Nicolas, 34980 SAINT GELY DU FESC (FR)
(74) Mandataire: Argyma

(57) **Abrégé**

L'invention a pour objet un outil de contrôle de la position d'une plaque d'immatriculation montée sur un véhicule, qui comprend un cadre frontal (1) inscrit dans un rectangle, ayant une face externe (15) apte à être appliquée contre la plaque à contrôler et une face interne (16), ledit cadre frontal présentant un bord supérieur (12) sur lequel est monté un capot supérieur (2), et un bord inférieur (13) sur lequel est monté un capot inférieur (3), lesdits capots inférieur et supérieur étant évasés latéralement et orientés selon un écartement croissant, chacun étant formé d'un volet (22, 23) sensiblement plan prolongé par deux ailerons (221, 231) s'étendant latéralement de part et d'autre dudit volet, et qui sont rabattus selon un angle prédéterminé vers le capot opposé, de manière à matérialiser un espace intérieur limité par lesdits capots et par la face interne dudit cadre frontal.

L'outil peut être articulé pour changer de conformation et s'adapter aux différentes inclinaisons possibles de la plaque, tout en assurant le contrôle de la visibilité géométrique à l'intérieur d'un espace conforme à la réglementation.

## Description

La présente invention appartient au domaine des instruments de contrôle des véhicules à moteur, et plus particulièrement à celui des outils de contrôle du placement correct des plaques d'immatriculation sur les véhicules à moteur.

Elle a pour objet un outil destiné à vérifier que le montage d'une plaque d'immatriculation d'un véhicule est fait (ou a été fait) de manière à ce que la plaque soit visible en toutes circonstances, par sa taille, son inclinaison et son environnement. Elle a également pour objet l'utilisation de cet outil pour le contrôle de la conformité des plaques d'immatriculation des véhicules à deux ou trois roues.

Les usagers des véhicules deux-roues motorisés représentent moins de 2% du trafic routier, mais près d'un quart des personnes tuées dans des accidents de la circulation. Différentes mesures ont été prises pour la sensibilisation et la prévention des risques depuis l'instauration le 1^{er} janvier 1980 du port obligatoire du casque pour les usagers de cyclomoteurs en toutes circonstances, jusqu'à l'obligation d'allumage des feux le jour pour les motocyclettes légères et les cyclomoteurs en 2007, en passant par l'immatriculation des cyclomoteurs neufs en 2004.

Mais les mesures les plus spectaculaires dans leurs effets concernent la limitation de la vitesse et les contrôles destinés à les faire respecter. La mise en place du contrôle-sanction automatisé (c'est-à-dire en termes plus communs, des radars routiers) a marqué une étape significative dans ce sens.

Cependant, nombre de radars ne sont pas aptes à "flasher" les deux-roues par l'arrière, ce qui fait que nombre de motards et de scootéristes ne sont jamais inquiétés, quelle que soit leur vitesse de déplacement. D'autres failles existent dans la technologie de contrôle automatisé, dues notamment à la difficulté d'obtenir un cliché lisible de la plaque portant le numéro d'immatriculation lorsque celle-ci est inclinée au-delà d'une certaine limite. Un autre problème découle de la possible présence d'éléments fixés sur le véhicule et pouvant cacher le numéro d'immatriculation sous certains angles, ce qui gêne (voire empêche) l'identification du véhicule par les dispositifs de lecture comme par les agents chargés du contrôle. Ces obstacles visuels peuvent être dus à l'emplacement (mal) choisi pour fixer la plaque, ou bien provenir d'accessoires équipant le véhicule qui ont été placés, soit nativement par le fabricant, soit lors de leur montage ultérieur par l'usager, dans le champ de la plaque.

Ce constat a amené les pouvoirs publics à préciser les règles pour la mise en place des plaques d'immatriculation sur les véhicules. En particulier, une directive du parlement européen (n° 2009/62/CE) du 13 juillet 2009, transposée en France le 3 décembre de la même année, est venue préciser les règles relatives à l'emplacement pour le montage de la plaque d'immatriculation arrière des véhicules à moteur à deux ou trois roues. Elle définit la position dans laquelle la plaque pourra être montée sur un support prévu à cet effet et généralement préexistant sur la structure du véhicule. Sont réglementés le positionnement général, l'inclinaison, les hauteurs minimale et maximales, ainsi que la visibilité géométrique. Des textes ultérieurs ont défini les dimensions propres des plaques d'immatriculation autorisées dans différents pays.

Les sanctions sont prévues par le code de la route, notamment dans son article R413-15 qui réprime la détention et l'usage d'appareil, dispositif ou produit permettant de se soustraire à la constatation des infractions routières. Un support de plaque d'immatriculation non réglementaire, par exemple incliné au-delà de 30°, placé sous la selle ou articulé, est concerné par ces dispositions. Les sanctions sont sévères puisque le véhicule peut être saisi, et des peines de suspension jusqu'à trois ans du permis de conduire peuvent être prononcées. Les usagers comme les professionnels sont donc activement incités au respect des règles.

Encore faut-il être en mesure de constater les éventuels défauts de conformité.

Or, à l'heure actuelle, les professionnels, comme les usagers, doivent apprécier les caractéristiques géométriques légales par leurs propres moyens, sans outil adapté. Le contrôle de l'ensemble des paramètres à respecter est long et fastidieux. L'absence de méthode bien établie induit une incertitude quant à la fiabilité des mesures réalisées et à la conformité du véhicule. Les mécaniciens professionnels amenés à installer des accessoires sur des véhicules deux-roues ou à remplacer les plaques d'immatriculation doivent cependant pouvoir garantir la conformité de leur travail, rapidement et avec certitude. Quant aux contrôles par les forces de police, ils sont encore plus délicats à réaliser. Récemment, pour donner des moyens aux forces de l'ordre françaises pour effectuer des contrôles systématiques, il a été imaginé d'utiliser un dispositif test qui permet de contrôler facilement la taille et l'inclinaison des plaques. Ce dispositif est constitué d'une feuille cartonnée ayant la dimension des plaques autorisées, et qui comporte une ligne de couleur selon laquelle il convient de découper ou de plier la feuille pour disposer d'un angle de 30°. Ce test, s'il est extrêmement bon marché, ne permet cependant pas d'effectuer de manière précise et fiable un contrôle de l'ensemble des paramètres réglementaires concernant la position des plaques d'immatriculation des deux-roues. En particulier, il ne permet pas d'apprécier objectivement et rapidement la visibilité géométrique de la plaque, car il ne donne aucune information quant à l'absence dans son environnement d'éléments structurels ou d'accessoires susceptibles d'en gêner la lecture.

Avec l'augmentation du nombre de tués sur les routes et particulièrement parmi les conducteurs de deux-roues, de nombreuses voix s'élèvent pour renforcer les contrôles. Une solution préconise de simplifier la mission de contrôle des deux-roues motorisés par les forces de l'ordre avec la mise en place d'un format unique, plus simple à vérifier. L'uniformisation de la taille des plaques d'immatriculation faciliterait aussi le travail des fabricants des détaillants en charge de leur vente et de leur pose, en réduisant le nombre de formats de plaques et en diminuant les frais, notamment ceux de stockage. Toutefois, malgré leur intérêt, ces mesures ne constituent pas une réponse à la réglementation relative à l'emplacement pour le montage de la plaque d'immatriculation arrière des véhicules à moteur à deux ou trois roues.

Il existe donc un besoin de disposer d'un instrument permettant de vérifier la conformité de l'emplacement destiné au montage d'une plaque d'immatriculation sur un véhicule, rapidement et en toute fiabilité. Il est décisif en particulier de garantir que la plaque sera bien visible en cas de contrôle routier, tant du fait de son inclinaison modérée que du fait de sa visibilité géométrique, ce qui suppose qu'aucun objet se trouvant à proximité ne vient faire obstacle à la lecture de ladite plaque. Or, l'espace qui doit être libre à proximité de la plaque est défini de manière géométrique par deux dièdres qu'il est aisé de représenter sur un schéma, mais qui sont nettement plus délicats à matérialiser par rapport au véhicule en conditions réelles.

La difficulté est accrue par le fait qu'une plaque d'immatriculation peut être orientée selon diverses inclinaisons - sous réserve de rester dans les limites autorisées - ce qui brouille encore les repères à prendre pour définir l'espace devant être dégagé aux alentours.

La présente invention se propose de surmonter ces difficultés pour répondre au besoin ici identifié, en offrant un dispositif apte à vérifier en une seule opération que la plaque pourra être placée (ou qu'elle a été placée) dans un environnement permettant sa lecture sans obstacle visuel et selon une inclinaison correcte. Un autre objectif de la présente invention est qu'un tel dispositif puisse être mis en oeuvre dans tout l'intervalle autorisé et s'adapte aux différentes positions possibles en termes d'inclinaison et de dégagement visuel. Un autre objectif est de contrôler par une même opération la taille conforme de la plaque.

Ainsi, la présente invention a pour objet un outil pour le contrôle de la position d'une plaque d'immatriculation montée sur un véhicule, qui comprend un cadre frontal inscrit dans un rectangle, ayant une face externe apte à être appliquée contre la plaque à contrôler et une face interne, ledit cadre frontal présentant un bord supérieur sur lequel est monté un capot supérieur, et un bord inférieur sur lequel est monté un capot inférieur, lesdits capots inférieur et supérieur étant évasés latéralement et orientés selon un écartement croissant, chacun étant formé d'un volet sensiblement plan prolongé par deux ailerons s'étendant latéralement de part et d'autre dudit volet, et qui sont rabattus selon un angle prédéterminé vers le capot opposé, de manière à matérialiser un espace intérieur limité par lesdits capots et par la face interne dudit cadre frontal, à un espace destiné à permettre un contrôle de la conformité d'une plaque d'immatriculation lorsque l'outil est appliqué contre celle-ci.

On comprend que le cadre frontal et les capots avec leurs ailerons délimitent cinq faces d'un espace tridimensionnel, divergent à partir du cadre, qui sans être fermé par des parois continues n'en est pas moins perçu visuellement comme tel par un observateur. Cet espace a une configuration prédéterminée en fonction des contraintes géométriques que l'on souhaite respecter lors de la mise en place d'une plaque d'immatriculation sur un véhicule et qui vont être détaillées plus loin. Le cadre est de préférence un châssis, constituant une structure apte à supporter les capots et ouverte en son centre, de sorte que lorsqu'on l'applique contre une plaque d'immatriculation, il coïncide avec le pourtour de la plaque qui reste cependant pour l'essentiel visible.

L'outil est conçu de telle sorte que lorsqu'on applique le cadre frontal contre une plaque d'immatriculation, ou bien contre un support destiné à maintenir ladite plaque, les capots supérieur et inférieur délimitent la zone devant rester libre à proximité de la plaque : l'ensemble de l'outil doit trouver sa place avec l'inclinaison requise, sans qu'un obstacle de quelque nature que ce soit ne vienne l'en empêcher. À défaut, le contrôle est négatif : la position de la plaque d'immatriculation est incorrecte. Grâce à cet outil, on peut d'un seul geste vérifier l'emplacement adéquat de la plaque ou du support destiné à la recevoir. On comprend bien entendu, que ladite vérification peut se faire lors du premier montage de la plaque sur le véhicule, aussi bien qu'à postériori.

Dans la description qui va suivre, les repères spatiaux tels que supérieur, inférieur, latéral, etc., seront pris par rapport à la position usuelle qu'adoptera l'outil selon l'invention lors de son utilisation pour le contrôle d'un véhicule et de sa plaque d'immatriculation, c'est-à-dire lorsque le véhicule est en appui sur ses roues au sol.

Par leur position, les volets délimitent les faces supérieure et inférieure de l'espace tridimensionnel défini par l'outil objet de l'invention, tandis que les ailerons délimitent latéralement cet espace tridimensionnel. Dans un mode de réalisation particulier de l'invention, les ailerons de chaque capot peuvent être rabattus vers le capot opposé selon un angle de 90° par rapport au plan du volet qu'ils prolongent. Les deux ailerons placés d'un même côté sont dans ce cas dans un plan vertical perpendiculaire aux plans des volets qui les portent et matérialisent des limites verticales latérales de l'outil de contrôle. Ils peuvent être dans un même plan ou bien dans des plans parallèles proches.

Selon un mode de réalisation préféré de l'invention, chaque volet adopte la forme d'un trapèze isocèle dont la petite base est montée sur le bord supérieur ou inférieur du cadre, de sorte que les ailerons prolongent chaque volet sur ses deux côtés non parallèles en s'écartant avec un degré d'ouverture latéral prédéterminé correspondant à la valeur de l'angle adjacent à la petite base dudit trapèze.

Les volets ont ainsi une forme trapézoïdale avec un axe de symétrie coupant les deux bases orthogonalement (il est la médiatrice des deux bases). Les deux côtés non parallèles des volets ont un degré d'ouverture défini par les angles adjacents à la petite base, ici identiques du fait de la symétrie. Les capots sont donc évasés latéralement, leur embouchure étant plus large que l'extrémité associée au cadre frontal. Cet évasement correspond à l'obligation d'assurer la visibilité de la plaque depuis des points d'observation décalés latéralement par rapport à l'axe principal du véhicule. Plus ouvert sera l'angle, plus évasée sera la forme trapézoïdale des volets et plus large sera l'espace pour lequel l'accès visuel latéral à la plaque d'immatriculation doit être dégagé.

Le degré d'ouverture des ailerons par rapport la médiatrice du volet qui les porte peut être par exemple choisi entre 15° et 40°. Par exemple, selon l'invention, le degré d'ouverture prédéterminé des ailerons latéraux est de 30° par rapport la médiatrice du volet qui les porte. Cette valeur est celle qui est considérée la plus judicieuse pour les véhicules à deux ou trois roues, et que l'on trouve dans les textes normatifs européens.

En ce qui concerne les volets des capots délimitant les faces supérieure et inférieure de l'espace tridimensionnel, ils peuvent également adopter différentes orientations prédéfinies. Ils peuvent être parallèles entre eux, ou bien de préférence s'écarter l'un de l'autre, offrant les mêmes avantages que précédemment décrit, notamment pour offrir un accès visuel plus large.

Selon une caractéristique intéressante de l'invention, les capots sont liés l'un à l'autre par des moyens d'entretoise placés à distance du cadre, dont la longueur, au moins égale à la hauteur dudit cadre, impose un écartement des volets des capots selon un degré d'ouverture vertical prédéterminé. On a ainsi une liaison rigide entre les deux capots, qui fixe leur écartement à la valeur prédéterminée souhaitée.

Par ailleurs, il est intéressant de pouvoir régler l'écartement des volets l'un par rapport à l'autre à une valeur d'angle prédéterminée choisie par l'opérateur (et souvent imposée par la réglementation), en fonction de divers paramètres qu'il souhaite respecter (type et taille du véhicule, usage prévu, réglementation applicable, ...). Pour ce faire, selon une caractéristique préférée de l'invention, cumulative ou indépendante de la précédente, les capots supérieur et inférieur sont montés respectivement sur les bords supérieur et inférieur du cadre par une liaison articulée autorisant un déplacement de chaque capot en rotation par rapport à l'axe de ladite liaison. On peut ainsi régler à volonté l'ouverture angulaire verticale de chacun des volets.

Il est dans ce cas possible de modifier également l'orientation relative du cadre et des capots. Ceci constitue un avantage particulièrement intéressant. En effet, les plaques d'immatriculation peuvent être installées sur les véhicules selon différentes inclinaisons, ce qui fait que le cadre frontal de l'outil va prendre appui sur une surface inclinée pour effectuer l'opération de contrôle. Les capots devront être abaissés ou relevés pour adopter l'orientation souhaitée par rapport au véhicule dans son ensemble ou par rapport au niveau du sol. La liaison articulée entre les volets et le cadre frontal permet cet ajustement.

Ce faisant, il est généralement recherché de maintenir un écartement constant entre les capots, y compris lorsqu'on fait varier l'orientation des capots par rapport au plan du cadre frontal, de sorte que l'ouverture verticale des capots garde une valeur prédéterminée. De manière avantageuse, selon l'invention, les moyens d'entretoise comprennent deux organes rigides articulés chacun en deux points, aptes à maintenir constant le degré d'ouverture des volets lors du déplacement des capots en rotation par rapport aux axes de liaison avec le cadre. Les organes articulés sont par exemple des charnières, des coudes articulés de type compas, ou autre. Ainsi, lorsqu'un des capots est déplacé vers le haut ou vers le bas selon la liaison articulée l'unissant au bord correspondant du cadre frontal, l'autre capot opère un mouvement sensiblement de même ampleur.

Le degré d'ouverture vertical des volets peut être par exemple choisi entre 15° et 50°. Selon un mode de réalisation particulier de l'invention, que les capots soient articulés sur le cadre frontal ou non, les moyens d'entretoise ont une longueur telle que l'écartement des volets des capots a un degré d'ouverture total de 35°. Cette valeur est celle qui est considérée la plus judicieuse pour les véhicules à deux ou trois roues, et que l'on trouve dans les textes normatifs européens.

Selon une caractéristique particulièrement intéressante de l'outil conforme à l'invention, celui-ci comprend des moyens de contrôle de l'orientation des volets des capots selon une inclinaison prédéterminée par rapport à un plan horizontal. En effet, si l'écartement des capots est défini par son degré d'ouverture total, il est également recommandé que l'emplacement de l'outil durant la vérification du bon emplacement de la plaque d'immatriculation, et donc son orientation générale, corresponde à une zone dont on souhaite qu'elle reste dégagée, de sorte que l'angle sous lequel la plaque peut être lue soit aisément accessible par les personnes ou les dispositifs chargés du contrôle des véhicules en circulation. Le plan horizontal est pris comme plan de référence pour définir une orientation de l'outil et de ses capots, dans la mesure où le véhicule est au repos sur le sol et que les positions des plaques d'immatriculation sont réglementées par rapport au plan horizontal également.

Tout moyen de contrôle de l'inclinaison par rapport à un plan horizontal connu de l'homme de l'art peut être mis en oeuvre dans le cadre de la présente invention. Selon un mode de réalisation préféré, les moyens de contrôle de l'orientation des volets comprennent une nivelle placée sur un aileron d'un capot de sorte que son axe soit dans un plan horizontal lorsque les capots adoptent ladite inclinaison prédéterminée. En pratique, une fois que l'inclinaison des capots est déterminée, on fixe une nivelle (aussi appelée niveau à bulle) sur un volet, en position horizontale. On peut aussi fixer sur un volet un élément de support, qui est horizontal quand les capots sont placés selon l'inclinaison désirée, et poser la nivelle sur ledit support uniquement au moment de l'utilisation de l'outil.

Le volet supérieur peut présenter par exemple une inclinaison de 5° à 50° vers le haut et le volet inférieur de 5° à 50° vers le bas, par rapport à un plan horizontal. Selon un mode de réalisation particulier et préféré de l'invention, le volet supérieur présente une inclinaison de 30° vers le haut et le volet inférieur de 5° vers le bas, par rapport à un plan horizontal. Cette valeur est celle qui est considérée la plus judicieuse pour les véhicules à deux ou trois roues, et que l'on trouve dans les textes normatifs européens.

Les différentes dispositions qui viennent d'être décrites contribuent à la réalisation d'un outil simple d'emploi permettant de s'assurer en un seul geste de la visibilité géométrique d'une plaque d'immatriculation sur un véhicule. L'articulation des différentes parties permet qu'il s'adapte à l'inclinaison de la plaque tout en respectant le cône d'ouverture divergent défini par les textes réglementaires pour la visibilité. Cet outil modifie ainsi sa conformation en fonction de l'inclinaison de la plaque elle-même, ce qui lui donne un caractère universel. Toutefois, comme indiqué plus haut, l'inclinaison d'une plaque peut être acceptée dans un intervalle raisonnable, car c'est un paramètre important pour une bonne lisibilité. C'est pourquoi l'outil selon la présente invention peut être muni d'organes limitant sa faculté d'ajustement conformationnel à un intervalle prédéterminé : le déplacement de chaque capot en rotation par rapport au cadre frontal selon l'axe de la liaison articulée ne peut se faire qu'avec une amplitude donnée. De tels organes peuvent être avantageusement des moyens de butée limitant la rotation des capots par rapport au cadre frontal dans une plage d'angle prédéterminée, ladite plage d'angle correspondant aux différentes inclinaisons par rapport à la verticale que peut adopter le cadre frontal.

Différents types de butée peuvent être mis en oeuvre par un homme du métier qui saura les agencer au mieux sur les parties mobiles de l'outil, et les dimensionner en fonction des amplitudes autorisées. Selon un mode de réalisation particulier, les moyens de butée comprennent i) des taquets supérieurs ménagés sur le volet supérieur à proximité de sa petite base aptes à prendre appui sur la face interne du cadre lorsque l'inclinaison maximale du cadre frontal, face externe vers le bas par rapport à la verticale, est atteinte, et ii) des taquets inférieurs ménagés sur le volet inférieur à proximité de sa petite base, aptes à prendre appui sur la face interne du cadre lorsque l'inclinaison maximale du cadre frontal, face externe vers le haut par rapport à la verticale, est atteinte. Les deux paires de taquets peuvent être dimensionnées de façon à limiter la rotation des deux capots selon une amplitude différente ou identique.

Toujours selon un mode de réalisation particulier, les moyens de butée sont agencés de sorte que i) la face externe du cadre frontal puisse adopter une inclinaison maximale vers le haut de 30° par rapport à la verticale, et que ii) la face externe du cadre frontal puisse adopter une inclinaison maximale vers le bas de 15° par rapport à la verticale. Les volets supérieur et inférieur présentent ainsi chacun un degré d'écartement prédéterminé par rapport à un plan horizontal. Ces valeurs d'angle sont considérées comme étant les plus judicieuses pour les véhicules à deux ou trois roues. Elles répondent notamment aux exigences des textes normatifs européens.

L'outil selon l'invention peut être utilisé pour vérifier le bon positionnement de l'emplacement de montage prévu sur les véhicules à moteur. Par l'expression "emplacement pour le montage", on désigne un élément de structure du véhicule apte à recevoir de manière rigide une plaque d'immatriculation. Cet élément de structure est donc un support, généralement muni de moyens de fixation coopérant avec des moyens complémentaires de la plaque pour obtenir son maintien solidaire efficace, par vissage, rivetage ou autre. En Europe, pour les véhicules à deux ou trois roues par exemple, les dimensions de ce support sont réglementées par la Directive 2009/62/CE en fonction du type de véhicule.

Cependant, l'outil selon l'invention peut également être utilisé pour le contrôle de plaques déjà installées sur leur support. Dans ce cas, il est avantageux de contrôler du même geste la conformité de la taille des plaques. Pour ce faire, l'outil selon l'invention est conçu de telle sorte que son cadre frontal ait la taille d'une plaque réglementaire. Lorsque l'opérateur applique l'outil contre la plaque, il peut constater instantanément *de visu* s'il y a identité entre les dimensions du cadre frontal et de ladite plaque. Il y avait quatre modèles autorisés jusqu'à récemment (deux restant à ce jour) : 140 mm x 120 mm pour les cyclomoteurs ; 170 mm ou 210 mm x 130 mm pour les motocyclettes ; et sur 2 lignes 275 mm ou 300 mm x 200 mm pour tous les autres véhicules, dont les tricycles et quadricycles non carrossés. Ainsi, selon une caractéristique intéressante de l'outil objet de l'invention, la face externe du cadre frontal a des dimensions identiques à celles préconisées par les normes en vigueur pour le véhicule contrôlé. Ceci a pour corollaire que l'opérateur ait à sa disposition autant d'outils, chacun ayant un cadre frontal de taille adéquate.

Pour que l'outil objet de l'invention puisse être mis en oeuvre pour un contrôle d'un seul geste, il est avantageusement doté d'un organe de préhension. Ainsi, la face interne du cadre peut être munie d'une poignée apte à permettre la manipulation de l'outil par un opérateur.

L'outil tel qu'il vient d'être décrit peut être utilisé pour le contrôle de l'emplacement d'une plaque d'immatriculation sur toutes sortes de véhicules, la plaque devant se trouver dans une position donnée et son environnement devant être libre de tout obstacle visuel. De manière avantageuse, cet outil trouve une utilisation pour le contrôle de la position d'une plaque d'immatriculation montée à l'arrière d'un véhicule à moteur à deux ou trois roues. Cette utilisation peut notamment comprendre :
- le contrôle de l'inclinaison de la plaque d'immatriculation par rapport à la verticale,
- le contrôle de la visibilité géométrique à l'intérieur d'un espace déterminé (par exemple conforme à la réglementation),

Elle peut comprendre en outre le contrôle de la dimension de la plaque d'immatriculation dudit véhicule.

La présente invention sera mieux comprise, et des détails en relevant apparaîtront à la lumière de la description qui va être faite de différentes variantes de réalisation, en relation avec les figures annexées, dans lesquelles :
La fig.1 est une vue en perspective d'un outil selon l'invention, faisant apparaître la face externe du cadre frontal.
La fig.2 est une vue en perspective du même outil, depuis la face interne du cadre frontal. La fig.3 est une représentation schématique de l'outil, en position durant son utilisation. La fig.4 est une vue de côté d'un outil selon l'invention, en position intermédiaire.
Les fig.5a et 5b sont des représentations schématiques des inclinaisons et emplacements autorisés par la directive 2009/62/CE pour le montage de la plaque d'immatriculation arrière des véhicules à moteur à deux ou trois roues.
Les fig.6 et 7 sont des vues de côté d'un outil selon l'invention, en positions extrêmes.

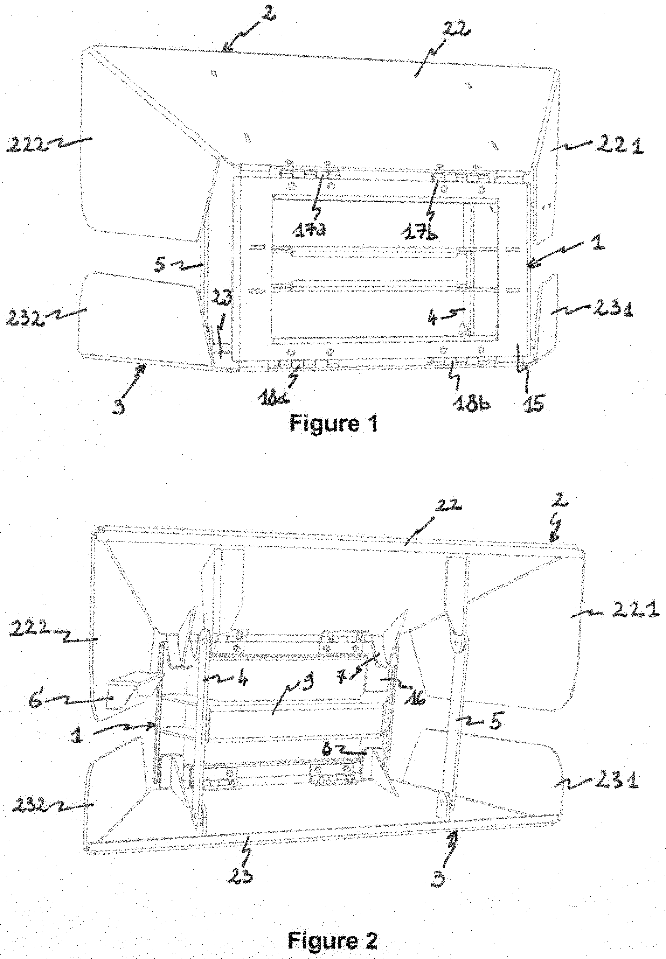

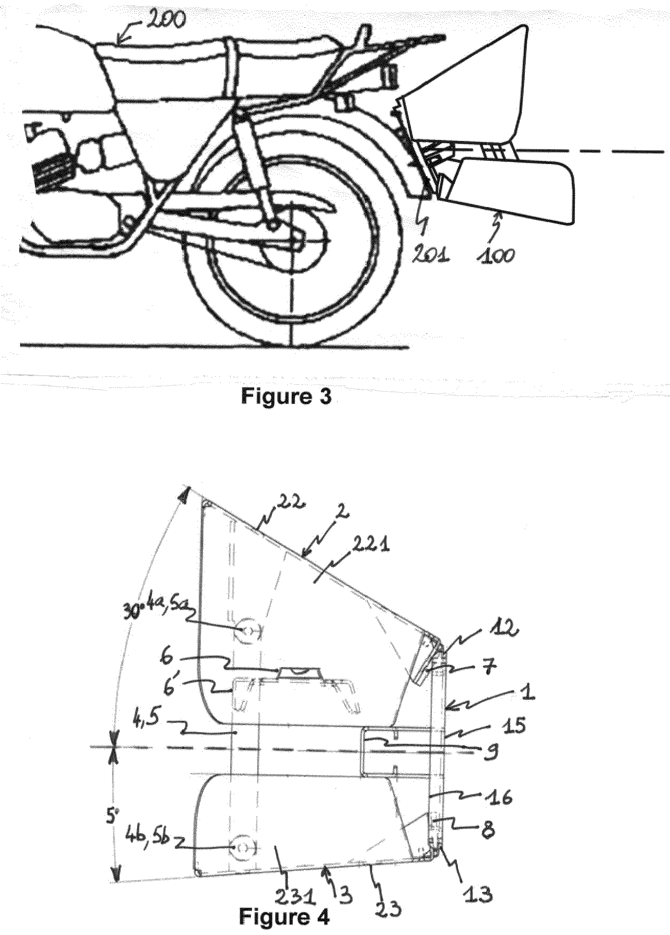

Sur la fig.1 et la fig.2 est représenté un outil selon l'invention, vu selon deux angles différents qui font apparaître ses éléments de structure. On peut également se référer à la fig.4. L'outil 100 comprend le cadre frontal 1 avec sa face externe 15 et sa face interne 16. Le cadre frontal 1 comporte le bord supérieur 12 sur lequel est monté le capot supérieur 2, et le bord inférieur 13 sur lequel est monté le capot inférieur 3. La face interne 16 du cadre frontal 1 est munie de la poignée 9 permettant la manipulation de l'outil par un opérateur.

Chacun des capots 2, 3 est formé d'un volet sensiblement plan, évasés latéralement et orientés selon un écartement croissant. Ils sont prolongés par deux ailerons s'étendant latéralement de part et d'autre dudit volet et qui sont rabattus vers le capot opposé. Le volet supérieur 22 porte ainsi les ailerons latéraux 221 et 222 rabattus vers le capot inférieur 3, c'est-à-dire vers le bas ; le volet inférieur 23 porte les ailerons latéraux 231 et 232 rabattus vers le capot supérieur 2, c'est-à-dire vers le haut. Dans l'exemple ici présenté, les ailerons 221, 222, 231, 232 sont rabattus vers le capot opposé selon un angle de 90° par rapport au plan du volet 22, 23 qu'ils prolongent.

Les volets 22, 23 ont la forme d'un trapèze, dont la petite base est montée sur le bord correspondant 12, 13 du cadre 1, de sorte qu'ils sont évasés latéralement. La grande base est libre et forme l'embouchure de l'espace délimité par les capots 2, 3. Entre les bases du trapèze, les côtés non parallèles portent les ailerons, qui vont s'écartant de la petite base vers la grande base, avec un angle qui est ici de 30° de part et d'autre de la médiatrice du trapèze.

Les capots 2, 3 sont montés sur le cadre frontal 1, par l'intermédiaire des charnières supérieures 17a, 17b d'une part et des charnières inférieures 18a, 18b d'autre part, qui permettent un déplacement des capots 2, 3 en rotation vers le haut ou vers le bas. Les volets 22, 23 sont reliés par deux entretoises 4, 5, rigides et articulées chacune en deux points 4a, 4b pour l'une et 5a, 5b pour l'autre. Le changement de conformation de l'outil peut donc être réalisé par déformation de l'espace compris entre les charnières et les points articulés, à partir de l'orientation prédéterminée donnée au cadre frontal et aux capots par l'opérateur pour les besoins du contrôle, comme il sera expliqué plus loin en détail. Quant aux capots 2, 3, leur écartement va croissant, et ils ont ici un degré d'ouverture total de 35°, imposé par la longueur des entretoises 4, 5, réparti en deux angles par rapport à un plan horizontal : le volet supérieur 22 présente une inclinaison de 30° vers le haut et le volet inférieur 23 de 5° vers le bas. Le plan horizontal de référence est visualisé par le niveau à bulle 6, fixé ou simplement posé sur le support 6'.

L'outil comprend des butées limitant la course des capots. Deux taquets supérieurs 7 sont ici ménagés sur le volet supérieur 22 à proximité de sa petite base, de sorte à prendre appui sur la face interne 12 du cadre frontal 1. De même, deux taquets inférieurs 8 sont ici ménagés sur le volet inférieur 23 à proximité de sa petite base, de sorte à prendre appui sur la face interne 12 du cadre frontal 1. L'angle formé entre les taquets et le volet correspondant est choisi en fonction du secteur d'inclinaison autorisée pour la plaque d'immatriculation.

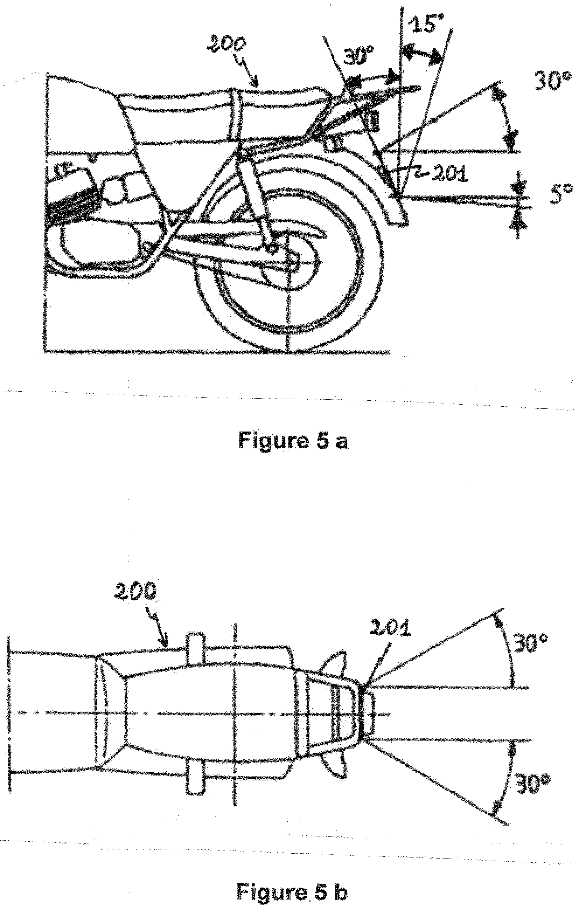

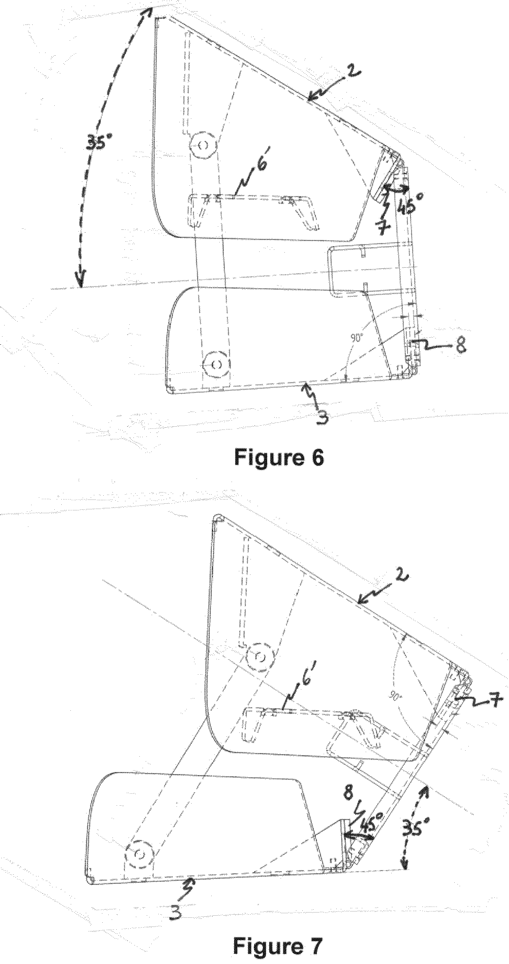

Cet outil est spécialement dimensionné pour réaliser le contrôle de la plaque arrière des véhicules à deux roues ou à trois roues, dont la réglementation en termes de placement (visibilité géométrique) et d'inclinaison est illustrée aux figures 6 et 7, conformément à la Directive 2009/62/CE. La fig.5a montre l'éventail de l'inclinaison maximale admise pour une plaque, vers le haut (30°) ou vers le bas (15°). Est aussi représenté l'espace devant rester libre à proximité de la plaque, vers le haut (30°) et vers le bas (5°). La fig.5b représente l'espace devant rester libre à proximité de la plaque, de part et d'autre du plan longitudinal médian du véhicule, à savoir à droite (30°) et à gauche (30°). En outre, le cadre frontal 1 a des dimensions conformes à celles préconisées par les normes nationales en vigueur pour ce type de véhicule.

Comme on le voit fig.3, durant son utilisation, l'outil est placé de sorte que la face externe 15 du cadre frontal 1 s'appuie contre la plaque d'immatriculation 201 du véhicule 200. Il s'agit ici d'une plaque montée à l'arrière d'un véhicule 200 à moteur à deux roues. Le cadre frontal 1 adopte donc l'inclinaison de la plaque. L'opérateur va alors ajuster l'orientation des capots 2, 3, de manière à amener le niveau à bulle 6 à l'horizontale. Si cette opération est possible sans que rien ne gêne l'outil, le test est positif : le véhicule, ou du moins sa plaque d'immatriculation, est conforme. Par contre, s'il n'est pas possible de manoeuvrer les capots 2, 3, pour amener le niveau à l'horizontale tout en maintenant le cadre frontal en appui sur la plaque d'immatriculation ou son support, la conclusion est que l'installation de ladite plaque n'est pas conforme à la réglementation. L'opérateur peut aisément diagnostiquer la raison de cet empêchement pour y remédier.

Les fig.6 et 7 illustrent deux positions limites d'un outil selon l'invention, pour des valeurs d'inclinaison d'une plaque d'immatriculation allant de 15° vers le bas (fig. 6) à 30° vers le haut (fig.7). Lorsqu'une plaque d'immatriculation 201 est placée verticalement, l'outil étant en position, les taquets supérieurs 7 forment un angle de 30° avec le cadre frontal 1, et les taquets inférieurs 8 forment un angle de 15° avec ledit cadre frontal. Lorsqu'une plaque est inclinée de 15° vers le bas, les taquets inférieurs 8 sont en butée sur le cadre frontal. A l'inverse, lorsque la plaque est inclinée de 30° vers le haut (fig. 7), les taquets supérieurs 7 sont en butée sur le cadre frontal. L'angle entre le cadre frontal et les taquets est dans ces deux cas maximal, à savoir 45°. Ce faisant, les capots supérieur 2 et inférieur 3 restent dans l'orientation requise pour la visibilité géométrique, après ajustement jusqu'à obtention de l'horizontalité par contrôle visuel du niveau à bulle porté par le support 6'.

## Revendications

1. Outil (100) de contrôle de la position d'une plaque d'immatriculation (201) montée sur un véhicule (200), ***caractérisé en ce qu'***il comprend un cadre frontal (1) inscrit dans un rectangle, ayant une face externe (15) apte à être appliquée contre la plaque (201) à contrôler et une face interne (16), ledit cadre frontal présentant un bord supérieur (12) sur lequel est monté un capot supérieur (2), et un bord inférieur (13) sur lequel est monté un capot inférieur (3), lesdits capots inférieur et supérieur étant évasés latéralement et orientés selon un écartement croissant, chacun étant formé d'un volet (22, 23) sensiblement plan prolongé par deux ailerons (221, 222, 231, 232) s'étendant latéralement de part et d'autre dudit volet, et qui sont rabattus selon un angle prédéterminé vers le capot opposé, de manière à matérialiser un espace intérieur limité par lesdits capots et par la face interne dudit cadre frontal, correspondant à un espace destiné à permettre un contrôle de la conformité d'une plaque d'immatriculation lorsque l'outil est appliqué contre celle-ci.

2. Outil selon la revendication 1, ***caractérisé en ce que*** chaque volet (22, 23) adopte la forme d'un trapèze isocèle dont la petite base est montée sur le bord supérieur (12) ou inférieur (13) du cadre (1), de sorte que les ailerons (221, 222, 231, 232) prolongent chaque volet sur ses deux côtés non parallèles en s'écartant avec un degré d'ouverture latéral prédéterminé correspondant à la valeur de l'angle adjacent à la petite base dudit trapèze.

3. Outil selon l'une des revendications 1 ou 2, ***caractérisé en ce que*** le degré d'ouverture prédéterminé des ailerons latéraux (221, 222, 231, 232) est de 30° par rapport à la médiatrice du volet qui les porte.

4. Outil selon l'une des revendications précédentes, ***caractérisé en ce que*** les capots supérieur et inférieur (2, 3) sont montés respectivement sur les bords supérieur et inférieur (12, 13) du cadre (1) par une liaison articulée autorisant un déplacement de chaque capot en rotation par rapport à l'axe de ladite liaison.

5. Outil selon l'une des revendications précédentes, ***caractérisé en ce que*** les capots (12, 13) sont liés l'un à l'autre par des moyens d'entretoise placés à distance du cadre (1), dont la longueur, au moins égale à la hauteur dudit cadre, impose un écartement des volets (22, 23) des capots (2, 3) selon un degré d'ouverture vertical prédéterminé.

6. Outil selon la revendication précédente, ***caractérisé en ce que*** les moyens d'entretoise comprennent deux organes rigides (4, 5) articulés chacun en deux points, aptes à maintenir constant le degré d'ouverture des volets (22, 23) lors du déplacement des capots (2, 3) en rotation par rapport aux axes de liaison avec le cadre (1).

7. Outil selon l'une des revendications précédentes, *caractérisé en ce qu*'il comprend des moyens de contrôle de l'orientation des volets (22, 23) des capots (2, 3) selon une inclinaison prédéterminée par rapport à un plan horizontal.

8. Outil selon la revendication précédente, ***caractérisé en ce que*** les moyens de contrôle de l'orientation des volets comprennent une nivelle (6) placée sur un desdits ailerons (221, 222, 231, 232) d'un capot (2, 3) de sorte que son axe soit dans un plan horizontal lorsque lesdits capots adoptent ladite inclinaison prédéterminée.

9. Outil selon l'une des revendications 5 à 8, ***caractérisé en ce qu'***il comprend des moyens de butée limitant la rotation des capots (2, 3) par rapport au cadre frontal (1) dans une plage d'angle prédéterminée, ladite plage d'angle correspondant aux différentes inclinaisons par rapport à la verticale que peut adopter ledit cadre frontal.

10. Outil selon la revendication précédente, ***caractérisé en ce que*** les moyens de butée comprennent des taquets supérieurs (7) ménagés sur le volet supérieur (2) à proximité de sa petite base aptes à prendre appui sur la face interne (16) du cadre frontal (1) lorsque l'inclinaison maximale dudit cadre, face externe (15) vers le bas par rapport à la verticale, est atteinte,
et des taquets inférieurs (8) ménagés sur le volet inférieur (23) à proximité de sa petite base, aptes à prendre appui sur la face interne (16) du cadre frontal (1) lorsque l'inclinaison maximale dudit cadre, face externe (15) vers le haut par rapport à la verticale, est atteinte.

11. Outil selon la revendication 9 ou 10, ***caractérisé en ce que*** les moyens de butée sont agencés de sorte que i) la face externe (15) du cadre frontal (1) puisse adopter une inclinaison maximale vers le haut de 30° par rapport à la verticale, et que ii) la face externe (15) dudit cadre frontal puisse adopter une inclinaison maximale vers le bas de 15° par rapport à la verticale.

12. Outil selon l'une quelconque des revendications précédentes, ***caractérisé en ce que*** la face externe (15) du cadre frontal (1) a des dimensions identiques à celles préconisées par les normes en vigueur pour le véhicule contrôlé.

13. Outil selon l'une quelconque des revendications précédentes, ***caractérisé en ce que*** la face interne (16) du cadre frontal (1) est munie d'une poignée (9) apte à permettre la manipulation de l'outil par un opérateur.

14. Utilisation d'un outil selon l'une des revendications précédentes pour le contrôle de la position d'une plaque d'immatriculation (201) montée à l'arrière d'un véhicule (200) à moteur à deux ou trois roues.

15. Utilisation selon la revendication précédente comprenant :
- le contrôle de l'inclinaison de la plaque d'immatriculation (201) par rapport à la verticale,
- le contrôle de la visibilité géométrique à l'intérieur d'un espace déterminé,
et comprenant en outre le contrôle de la dimension de la plaque d'immatriculation dudit véhicule.
